# EUROPEAN PATENT APPLICATION

(11) **EP 4 749 550 A1**
(43) Date of publication of application: **27.05.2026**
(21) Application number: 25211339.4
(22) Date of filing: 27.10.2025
(51) Int. Cl.: G06Q 10/42, G06Q 30/0201, G06Q 30/0241

(54) **ARTIFICIAL INTELLIGENCE BASED CONSTRAINT FREE SOCIAL MEDIA**

(30) Priority: 21.11.2024 US 202463723155 P; 09.10.2025 US 202519354186
(71) Applicant: Meta Platforms, Inc., Menlo Park, CA 94025 (US)
(72) Inventor: Manickam Alagar Muthumanickam, Arun Karthick, Menlo Park, 94025 (US)
(74) Representative: Murgitroyd & Company

(57) **Abstract**

Systems or methods disclosed herein may provide artificial intelligence-based aggregation of social media content across multiple platforms. In an example, a computing system may receive content queries and may retrieve relevant content from various social media platforms. The computing system may generate consolidated content feeds that include first-party content from platforms owned by a primary entity and third-party content from external messaging platforms. The consolidated feeds may be arranged into content slots with sponsored content intelligently placed between organic content slots based on user engagement metrics. The computing system may implement machine learning models to optimize content selection or arrangement based on user interaction patterns.

## Description

### TECHNOLOGICAL FIELD

The present disclosure relates to social media content delivery systems, and more specifically to artificial intelligence-based systems and methods for dynamically aggregating and presenting social media content from multiple platforms.

### BACKGROUND

Social media platforms facilitate user interaction, content sharing, and network building through digital profiles, multimedia posting, and engagement tools such as likes, comments, and sharing functions. These platforms employ algorithms to personalize content and optimize user experience, enhancing connectivity, information exchange, and social engagement across a diverse, global user base.

### SUMMARY

Systems or methods disclosed herein may provide artificial intelligence-based aggregation of social media content across multiple platforms. In an example, a computing system may receive content queries and may retrieve relevant content from various social media platforms. The computing system may generate consolidated content feeds that include first-party content from platforms owned by a primary entity and third-party content from external messaging platforms. The consolidated feeds may be arranged into content slots with sponsored content intelligently placed between organic content slots based on user engagement metrics. The computing system may implement machine learning models to optimize content selection or arrangement based on user interaction patterns.

According to an aspect, there is provided a method comprising:
receiving, by one or more computer processors coupled to memory, a query associated with social media content;
retrieving social media content associated with a plurality of messaging platforms based on the query;
determining a consolidated content feed based on the social media content from the plurality of social media platforms; and
sending instructions to arrange the consolidated content feed into a plurality of content slots, wherein the content slots comprise first-party content slots comprising first-party platform content from platforms owned by a first entity and third-party content slots comprising third-party platform content from platforms owned by one or more other entities.

In one embodiment, the method further comprises providing the consolidated content feed to a user computing device.

In one embodiment, the method further comprises:
inserting sponsored content between the content slots in the consolidated content feed; and
providing the consolidated content feed to a user computing device.

In one embodiment, the retrieving the social media content is based on accessing the plurality of social media platforms, wherein the accessing comprises:
authenticating with at least one of the plurality of social media platforms using stored user credentials;
identifying available content types on the at least one of the plurality of social media platforms; and
determining content retrieval parameters for the at least one of the plurality of social media platforms.

In one embodiment, the determining the consolidated content feed comprises:
analyzing content relevance scores for the retrieved social media content;
filtering content based on user engagement metrics; and
organizing the content based on temporal relationships.

In one embodiment, the arranging the consolidated content feed comprises:
allocating a first portion of the plurality of content slots to first-party platform content;
allocating a second portion of content slots to the third-party platform content; and
distributing sponsored content between the plurality of content slots based on user engagement metrics.

In one embodiment, the method further comprises:
tracking user engagement with the consolidated content feed;
updating user preference data based on the tracked user engagement; and adjusting future content retrieval based on the updated user preference data.

In one embodiment, the method further comprises:
receiving sponsored content from one or more advertisers;
determining optimal placement positions within the consolidated content feed; and
inserting the sponsored content at the determined optimal placement positions.

In one embodiment, the first-party content slots comprise content from a first subset of the plurality of social media platforms owned by a social media company and the third-party content slots comprise content from external social media platforms.

According to another aspect, there is provided a method comprising:
receiving, by an artificial intelligence, AI, computing device, a query for social media content;
accessing, by the AI computing device, a plurality of social media platforms in response to the query;
retrieving social media content from the plurality of social media platforms based on the query;
generating, by the AI computing device, a consolidated content feed that includes content from the plurality of social media platforms;
arranging the consolidated content feed into a plurality of content slots, wherein the content slots comprise first-party content slots containing content from platforms owned by a first entity and third-party content slots containing content from platforms owned by other entities;
inserting sponsored content between the content slots in the consolidated content feed; and
providing the consolidated content feed to a user computing device.

In one embodiment, accessing the plurality of social media platforms comprises:
authenticating with each platform using stored user credentials;
identifying available content types on each platform; and
determining content retrieval parameters for each platform.

In one embodiment, generating the consolidated content feed comprises:
analyzing content relevance scores for retrieved content;
filtering content based on user engagement metrics; and
organizing content based on temporal relationships.

In one embodiment, arranging the consolidated content feed comprises:
allocating a first portion of content slots to first-party platform content;
allocating a second portion of content slots to third-party platform content; and
distributing sponsored content between the content slots based on engagement metrics.

In one embodiment, the method further comprises:
tracking user engagement with the consolidated content feed;
updating user preference data based on the engagement; and
adjusting future content retrieval based on the updated preference data.

In one embodiment, the method further comprises:
receiving sponsored content from multiple advertisers;
determining optimal placement positions within the consolidated feed; and
inserting the sponsored content at the determined positions.

In one embodiment, the first-party content slots contain content from social media platforms owned by a social media company and the third-party content slots contain content from external social media platforms.

According to a further aspect, there is provided a method comprising:
determining, by one or more computer processors coupled to memory, a user identifier associated with a first application;
determining a request, via the first application, for first content from a second application and third content from a third application;
determining that the first user identifier is associated with a second user identifier and a third user identifier, wherein the second user identifier is associated with the second application, and the third user identifier is associated with the third application;
automatically retrieving the first content via interaction with the second application;
automatically retrieving the second content via interaction with the third application; and
causing presentation of the first content and the second content in a user interface of the first application.

In one embodiment, the one or more computer processors coupled to memory are configured to execute an AI agent to interact with the second application or the third application.

In one embodiment, the first content and the second content are presented without opening the second application or the third application.

In one embodiment, the request is determined automatically when the user identifier opens the first application on a mobile device.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### DESCRIPTION OF THE DRAWINGS

FIG. 1A illustrates an example system for dynamic social media content aggregation.
FIG. 1B illustrates an example user device 102 associated with dynamic social media content aggregation.
FIG. 2 illustrates an example method for dynamic social media content aggregation as disclosed herein.
FIG. 3 illustrates an example method for dynamic social media content aggregation as disclosed herein.
FIG. 4 illustrates a framework associated with machine learning.
FIG. 5 illustrates an example block diagram of an exemplary computing device suitable for implementing aspects of the disclosed subject matter.

The figures depict various embodiments for purposes of illustration only. One skilled in the art will readily recognize from the following discussion that alternative embodiments of the structures and methods illustrated herein may be employed without departing from the principles described herein.

### DETAILED DESCRIPTION

Some embodiments of the present invention will now be described more fully hereinafter with reference to the accompanying drawings, in which some, but not all embodiments of the invention are shown. Various embodiments of the invention may be embodied in many different forms and should not be construed as limited to the embodiments set forth herein. Like reference numerals refer to like elements throughout.

It is to be understood that the methods and systems described herein are not limited to specific methods, specific components, or to particular implementations. It is also to be understood that the terminology used herein is for the purpose of describing particular embodiments only and is not intended to be limiting.

Conventional social media platforms operate in isolation, requiring users to individually access multiple applications to view content across different platforms. This creates inefficiencies as users switch between applications to consume content from various sources, disrupting user experience and engagement. Content feeds often include irrelevant content and advertisements that reduce user engagement. There is a need for intelligent mechanisms for consolidating and organizing cross-platform content, which may be based on user preferences and intent. The disclosed subject matter may provide dynamic content consolidation and delivery.

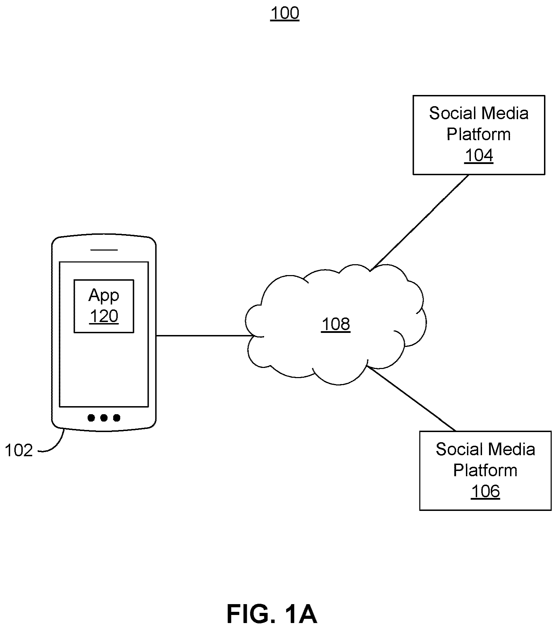

FIG. 1A illustrates an example system 100 associated with dynamic social media content aggregation. System 100 may include user device 102, social media platform 104, or social media platform 106 connected via a network 108. User device 102 may be a smartphone, tablet, laptop computer, wearable device, or other device.

Social media platform 104 may be operated by a first-party social media platform provider or other first-party entity that have operations to authenticate user-generated content. Social media platform 106 may be operated by a third-party social media platform provider or other third-party entity (e.g., owner of a messaging application) that have operations to authenticate user-generated content. Social media platform 104 or social media platform 106 may operate on one or more devices (e.g., servers). User device 102 may include an authorized social media application 120, which may be operated by the first-party entity which may be also referred to as the primary entity (e.g., first-party social medial platform provider). Herein for simplicity as an example, social media platform 104 may be associated with a first-party entity and social medial platform 106 may be associated with a third-party entity.

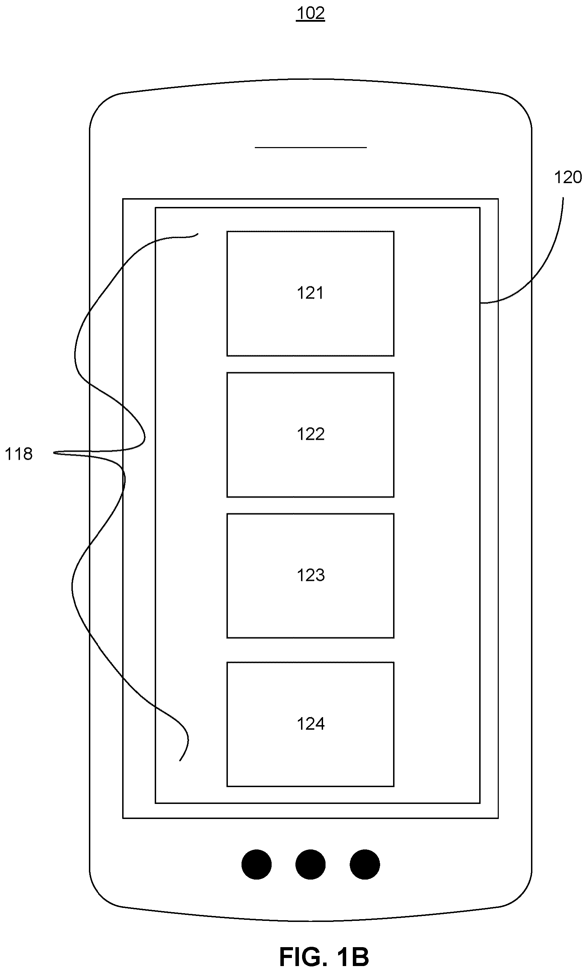

FIG. 1B illustrates an example user device 102 associated with dynamic social media content aggregation. As shown, user device 102 may include an application 120 which may be displayed. There may be content feed 118 (e.g., electronic social media newsfeed) with different slots, such as content slot 121, content slot 122, content slot 123, or content slot 124. Content feed 118 may be a consolidated content feed structure that provides for intelligent slot allocation. Content slots may include first-party slots that contain content from platforms owned by the primary entity (which may include different messaging applications) or third-party slots that contain content from external messaging platforms. The first-party slots may include content from different messaging applications (e.g., different types of social media platforms). Content slot 121, content slot 122, content slot 123, or content slot 124 may include first-party organic content, third-party organic content, sponsored content, or the like. Organic content in the social media context may include user-generated posts, personal stories, shared photos, or natural interactions between connected users without promotional intent.

In an example, content slot 121 and content slot 122 may receive content from first-party social media platform 104 owned by the primary entity. First-party social media platform 104 may provide direct application programming interface (API) access allowing efficient content retrieval or real-time updates. Content slot 123 may be associated with third-party social media platform 106 and may integrate content from the external platform through a partnership agreement or a public API, which may expand available content viewed with application 120, while maintaining performance. Application 120 may be a standalone app or integrated into a social media platform app.

First-party social media platform 104 may determine optimal slot arrangement based on multiple factors associated with a user profile for user device 102. For example, first-party social media platform 104 may implement comprehensive engagement metric collection and processing through its technical architecture. First-party social media platform 104 may deploy distributed event collection mechanisms across user device 102 or computing components. Client-side listeners may capture detailed interaction data including viewport intersection events, scroll position changes, touch and click interactions, media playback states, focus and blur events, or network state changes, among other things. These events may be processed through a buffering system that implements event batching, local storage for offline operation, compression for bandwidth optimization, priority queuing for critical events, duplicate filtering, or timestamp normalization.

First-party social media platform 104 may apply processed metrics through a scoring pipeline that determines engagement probability scores for content items. The scoring system may consider current context including time of day, user device type, network conditions, recent interaction history, or platform performance state, among other things. Scoring weights may be dynamically adjusted based on content freshness, user relationship strength, historical performance patterns, or platform diversity requirements.

First-party social media platform 104 may adaptively implement supervised or unsupervised learning approaches to refine its content delivery strategies. Supervised learning may use explicitly tracked engagement signals while unsupervised learning may identify emergent patterns in user behavior. This approach may be a dual approach that enables optimization for known engagement patterns while remaining responsive to new trends in content consumption behavior.

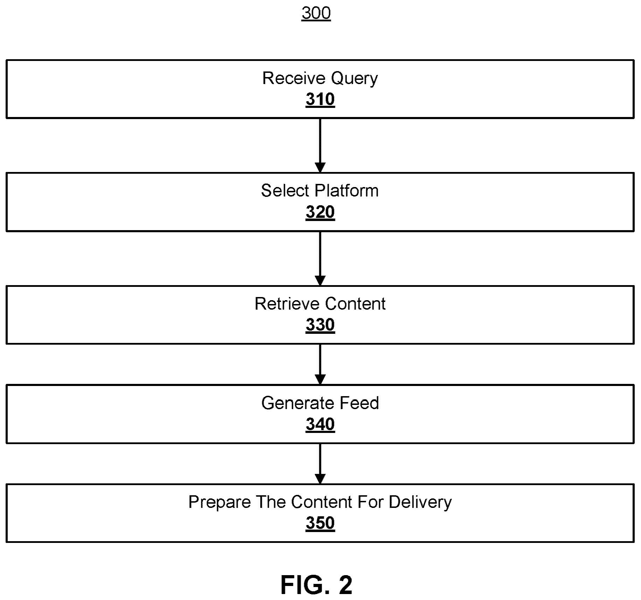

FIG. 2 illustrates an example method 300 for content aggregation and delivery as disclosed herein. At step 310, user queries may be received by user device 102. Natural language processing may extract intent parameters including content types requested, temporal constraints, source preferences, relationship filters, or sort criteria, among other things.

At step 320, based on the extracted parameters, platform selection may be performed. User device 102 (or other associated devices) may identify relevant content sources, verify platform availability, determine retrieval strategy, allocate computing resources, or initialize platform connections, among other things.

At step 330, content retrieval may be executed. At step 340, feed generation may be performed using an artificial intelligence engine. The artificial intelligence engine may process retrieved content by computing relevance scores for content items, applying user preference filters, determining optimal slot allocation, generating presentation metadata, preparing sponsored content insertion points, or creating content preview thumbnails, among other things.

At step 350, content delivery may be prepared for display by the system. The system may format the consolidated feed structure, optimize media resources for target devices, generate progressive loading manifests, establish update monitoring channels, initialize client-side caching instructions, or create fallback content versions, among other things.

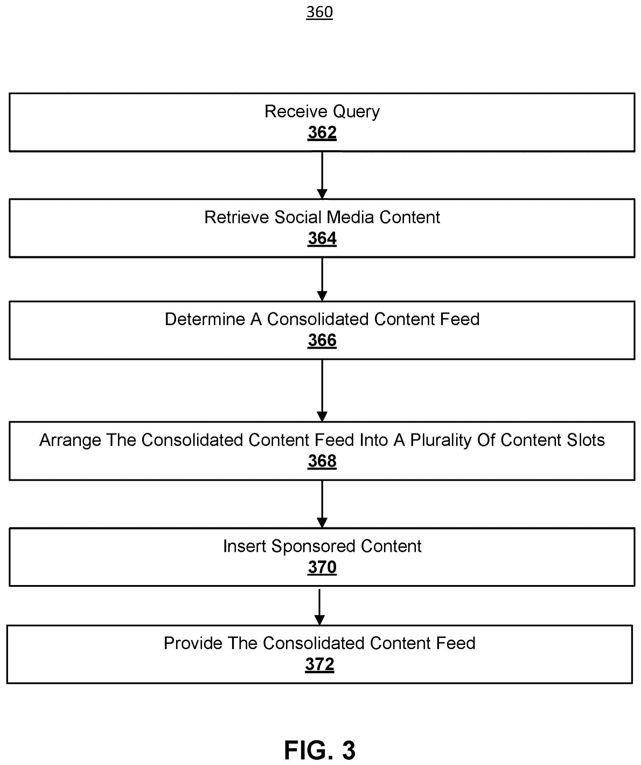

FIG. 3 illustrates an example method 360 for social media content aggregation and presentation as disclosed herein. At step 362, a query associated with social media content may be received. The query may include various parameters such as keywords, hashtags, user handles, content categories, or temporal constraints that define the scope of desired content retrieval, among other things.

At step 364, social media content associated with a plurality of messaging platforms (e.g., social media platform 104 or social medial platform 106) may be retrieved based on the query. The retrieval process may involve platform interaction protocols wherein the system may authenticate with at least one of the plurality of social media platforms using stored user credentials maintained in a secure credential vault. During this authentication process, the system may identify available content types on the respective platforms, which may include but are not limited to text posts, images, videos, stories, or interactive media elements. The system may further determine content retrieval parameters for each platform, taking into account rate limiting constraints, application programming interface (API) requirements, or platform-specific content formatting specifications.

At step 366, a consolidated content feed may be determined based on the social media content from the plurality of social media platforms. This determination process may include analyzing content relevance scores for the retrieved social media content using machine learning algorithms 132, filtering content based on user engagement metrics stored in the engagement database 134, or organizing the content based on temporal relationships to help ensure a coherent content narrative. The system may employ natural language processing or computer vision techniques to understand content context and help ensure appropriate content categorization.

At step 368, instructions may be sent to arrange the consolidated content feed into a plurality of content slots. The content slots may include first-party content slots that include first-party platform content from platforms owned by a first entity (e.g., social medial platform 104) and third-party content slots that include third-party platform content from platforms owned by one or more other entities (e.g., social medial platform 104). The arrangement process may involve allocating a first portion of the plurality of content slots to first-party platform content and a second portion of content slots to the third-party platform content. This allocation may be dynamically adjusted based on real-time engagement metrics or platform performance data.

At step 370, sponsored content may be strategically inserted between the content slots in the consolidated content feed. The sponsored content placement may be put in a preferred placement (e.g., optimized). Optimal placement positions within the consolidated content feed may be based on historical engagement data or advertiser requirements. The system may distribute sponsored content between the plurality of content slots based on user engagement metrics, which may assist with natural content flow while maximizing advertising effectiveness.

At step 372, the consolidated content feed may be provided to user device 102 through a content delivery network (e.g., social media network). The system may continuously track user engagement with the consolidated content feed, update user preference data based on the tracked user engagement, and adjust future content retrieval based on the updated user preference data.

The system may optimize content selection and arrangement using machine learning models trained on user interaction data. Technical improvements include reduced application switching overhead, enhanced content relevance, and optimized sponsored content placement.

In one example embodiment, a method may include determining, by one or more computer processors coupled to memory, a user identifier associated with a first application, determining a request, via the first application, for first content from a second application and third content from a third application, determining that the first user identifier is associated with a second user identifier and a third user identifier, wherein the second user identifier is associated with the second application, and the third user identifier is associated with the third application, automatically retrieving the first content via interaction with the second application, automatically retrieving the second content via interaction with the third application, and causing presentation of the first content and the second content in a user interface of the first application. The one or more computer processors coupled to memory can be configured to execute an AI agent to interact with the second application or the third application. The first content and the second content may be presented without opening the second application or the third application. The request can be determined automatically when the user identifier opens the first application on a mobile device.

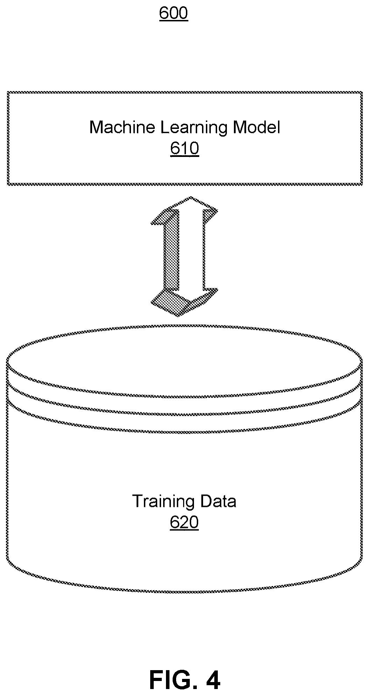

FIG. 4 illustrates a framework 600 associated with machine learning and/or artificial intelligence (AI). The framework 600 may be hosted remotely. Alternatively, the framework 600 may reside within the system 100 shown in FIG. 1 and may be processed/implemented by a device. In some examples, the machine learning model 610 (also referred to herein as artificial intelligence model 610) may be implemented/executed by a network device (e.g., server). In other examples, the machine learning model 610 may be implemented/executed by other devices (e.g., user device 102). The machine learning model 610 may be operably coupled with the stored training data in a training database 603 (e.g., data store). In some examples, the machine learning model 610 may be associated with other operations. The machine learning model 610 may be one or more machine learning models.

In another example, the training data 620 may include attributes of thousands of objects. Attributes may include but are not limited to the size, shape, orientation, position of the object(s), etc. The training data 620 employed by the machine learning model 610 may be fixed or updated periodically. Alternatively, the training data 620 may be updated in real-time based upon the evaluations performed by the machine learning model 610 in a non-training mode. This is illustrated by the double-sided arrow connecting the machine learning model 610 and stored training data 620.

The machine learning model 610 may be designed to generate consolidated content feeds associated with one or more received inputs, based in part on utilizing determined contextual information. This information includes fields like a description, variables defined, data category associated with the variables and the output (e.g., consolidated content feeds), and responses to generated prompts. The machine learning model 610 may be a large language model to generate representations (e.g., vector spaces), or embeddings, of one or more of the one or more inputs received. These machine learning model 610 may be trained (e.g., pretrained and/or trained in real-time) on a vast amount of textual data (e.g., associated with the one or more inputs), previous responses to one or more prompts generated, previously generated content feeds, or data capture of a wide range of language patterns and semantic meanings. The machine learning model 610 may understand and represent the context of words, terms, phrases and/or the like in a high-dimensional space, effectively capturing/determining the semantic similarities between different received inputs, including descriptions and responses to prompts, even when they are not exactly the same.

Typically, such determinations by some existing systems may require a large quantity of manual annotation(s) and/or brute force computer-based annotation to obtain the training data in a supervised training framework. However, example aspects of the present disclosure may deploy a machine learning model(s) (e.g., machine learning model 610) that may be flexible, adaptive, automated, temporal, learns quickly and trainable. Manual operations or brute force device operations may be unnecessary for the examples of the present disclosure due to the learning framework aspects of the present disclosure that are implementable by the machine learning model 610. As such, this enables one or more user inputs, queries, or other aspects of the examples of the present disclosure to be flexible and scalable to billions of users, and their associated communication devices, on a network device.

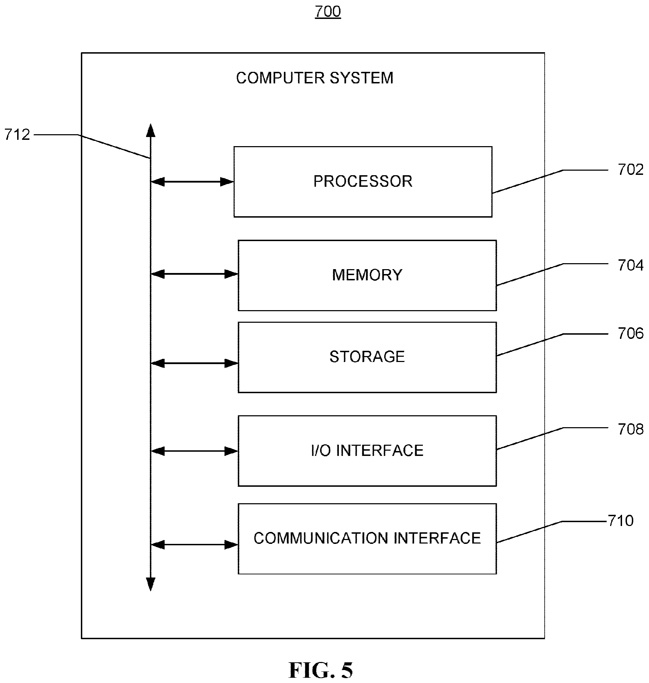

FIG. 5 illustrates an example computer system 700. In examples, one or more computer systems 700 perform one or more steps of one or more methods described or illustrated herein. In particular embodiments, one or more computer systems 700 (e.g., user device 102, database 106, or server 104) provide functionality described or illustrated herein. In examples, software running on one or more computer systems 700 performs one or more steps of one or more methods described or illustrated herein or provides functionality described or illustrated herein. Examples include one or more portions of one or more computer systems 700. Herein, reference to a computer system may encompass a computing device, and vice versa, where appropriate. Moreover, reference to a computer system may encompass one or more computer systems, where appropriate.

This disclosure contemplates any suitable number of computer systems 700. This disclosure contemplates computer system 700 taking any suitable physical form. As example and not by way of limitation, computer system 700 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, or a combination of two or more of these. Where appropriate, computer system 700 may include one or more computer systems 700; be unitary or distributed; span multiple locations; span multiple machines; span multiple data centers; or reside in a cloud, which may include one or more cloud components in one or more networks. Where appropriate, one or more computer systems 700 may perform without substantial spatial or temporal limitation one or more steps of one or more methods described or illustrated herein. As an example, and not by way of limitation, one or more computer systems 700 may perform in real time or in batch mode one or more steps of one or more methods described or illustrated herein. One or more computer systems 700 may perform at different times or at different locations one or more steps of one or more methods described or illustrated herein, where appropriate.

In examples, computer system 700 includes a processor 702, memory 704, storage 706, an input/output (I/O) interface 708, a communication interface 710, and a bus 712 (e.g., communication bus 103). Although this disclosure describes and illustrates a particular computer system having a particular number of particular components in a particular arrangement, this disclosure contemplates any suitable computer system having any suitable number of any suitable components in any suitable arrangement.

In examples, processor 702 includes hardware for executing instructions, such as those making up a computer program. As an example, and not by way of limitation, to execute instructions, processor 702 may retrieve (or fetch) the instructions from an internal register, an internal cache, memory 704, or storage 706; decode and execute them; and then write one or more results to an internal register, an internal cache, memory 704, or storage 706. In particular embodiments, processor 702 may include one or more internal caches for data, instructions, or addresses. This disclosure contemplates processor 702 including any suitable number of any suitable internal caches, where appropriate. As an example, and not by way of limitation, processor 702 may include one or more instruction caches, one or more data caches, and one or more translation lookaside buffers (TLBs). Instructions in the instruction caches may be copies of instructions in memory 704 or storage 706, and the instruction caches may speed up retrieval of those instructions by processor 702. Data in the data caches may be copies of data in memory 704 or storage 706 for instructions executing at processor 702 to operate on; the results of previous instructions executed at processor 702 for access by subsequent instructions executing at processor 702 or for writing to memory 704 or storage 706; or other suitable data. The data caches may speed up read or write operations by processor 702. The TLBs may speed up virtual-address translation for processor 702. In particular embodiments, processor 702 may include one or more internal registers for data, instructions, or addresses. This disclosure contemplates processor 702 including any suitable number of any suitable internal registers, where appropriate. Where appropriate, processor 702 may include one or more arithmetic logic units (ALUs); be a multi-core processor; or include one or more processors 702. Although this disclosure describes and illustrates a particular processor, this disclosure contemplates any suitable processor.

In examples, memory 704 includes main memory for storing instructions for processor 702 to execute or data for processor 702 to operate on. As an example, and not by way of limitation, computer system 700 may load instructions from storage 706 or another source (such as, for example, another computer system 700) to memory 704. Processor 702 may then load the instructions from memory 704 to an internal register or internal cache. To execute the instructions, processor 702 may retrieve the instructions from the internal register or internal cache and decode them. During or after execution of the instructions, processor 702 may write one or more results (which may be intermediate or final results) to the internal register or internal cache. Processor 702 may then write one or more of those results to memory 704. In particular embodiments, processor 702 executes only instructions in one or more internal registers or internal caches or in memory 704 (as opposed to storage 706 or elsewhere) and operates only on data in one or more internal registers or internal caches or in memory 704 (as opposed to storage 706 or elsewhere). One or more memory buses (which may each include an address bus and a data bus) may couple processor 702 to memory 704. Bus 712 may include one or more memory buses, as described below. In examples, one or more memory management units (MMUs) reside between processor 702 and memory 704 and facilitate accesses to memory 704 requested by processor 702. In particular embodiments, memory 704 includes random access memory (RAM). This RAM may be volatile memory, where appropriate. Where appropriate, this RAM may be dynamic RAM (DRAM) or static RAM (SRAM). Moreover, where appropriate, this RAM may be single-ported or multi-ported RAM. This disclosure contemplates any suitable RAM. Memory 704 may include one or more memories 704, where appropriate. Although this disclosure describes and illustrates particular memory, this disclosure contemplates any suitable memory.

In examples, storage 706 includes mass storage for data or instructions. As an example, and not by way of limitation, storage 706 may include a hard disk drive (HDD), a floppy disk drive, flash memory, an optical disc, a magneto-optical disc, magnetic tape, or a Universal Serial Bus (USB) drive or a combination of two or more of these. Storage 706 may include removable or non-removable (or fixed) media, where appropriate. Storage 706 may be internal or external to computer system 700, where appropriate. In examples, storage 706 is non-volatile, solid-state memory. In particular embodiments, storage 706 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 706 taking any suitable physical form. Storage 706 may include one or more storage control units facilitating communication between processor 702 and storage 706, where appropriate. Where appropriate, storage 706 may include one or more storages 706. Although this disclosure describes and illustrates particular storage, this disclosure contemplates any suitable storage.

In examples, I/O interface 708 includes hardware, software, or both, providing one or more interfaces for communication between computer system 700 and one or more I/O devices. Computer system 700 may include one or more of these I/O devices, where appropriate. One or more of these I/O devices may enable communication between a person and computer system 700. As an example, and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 708 for them. Where appropriate, I/O interface 708 may include one or more device or software drivers enabling processor 702 to drive one or more of these I/O devices. I/O interface 708 may include one or more I/O interfaces 708, where appropriate. Although this disclosure describes and illustrates a particular I/O interface, this disclosure contemplates any suitable I/O interface.

In examples, communication interface 710 includes hardware, software, or both providing one or more interfaces for communication (such as, for example, packet-based communication) between computer system 700 and one or more other computer systems 700 or one or more networks. As an example, and not by way of limitation, communication interface 710 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 710 for it. As an example, and not by way of limitation, computer system 700 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 700 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 700 may include any suitable communication interface 710 for any of these networks, where appropriate. Communication interface 710 may include one or more communication interfaces 710, where appropriate. Although this disclosure describes and illustrates a particular communication interface, this disclosure contemplates any suitable communication interface.

In particular embodiments, bus 712 includes hardware, software, or both coupling components of computer system 700 to each other. As an example and not by way of limitation, bus 712 may include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 712 may include one or more buses 712, where appropriate. Although this disclosure describes and illustrates a particular bus, this disclosure contemplates any suitable bus or interconnect.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, computer readable medium or any suitable combination of two or more of these, where appropriate. A computer-readable non-transitory storage medium may be volatile, non-volatile, or a combination of volatile and non-volatile, where appropriate.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

While the disclosed systems have been described in connection with the various examples of the various figures, it is to be understood that other similar implementations may be used or modifications and additions may be made to the described examples of an AI based constraint free social media platform, among other things as disclosed herein. For example, one skilled in the art will recognize that AI based constraint free social media, among other things as disclosed herein in the instant application may apply to any environment, whether wired or wireless, and may be applied to any number of such devices connected via a communications network and interacting across the network. Therefore, the disclosed systems as described herein should not be limited to any single example, but rather should be construed in breadth and scope in accordance with the appended claims.

In describing preferred methods, systems, or apparatuses of the subject matter of the present disclosure - verifying authenticity of media content - as illustrated in the Figures, specific terminology is employed for the sake of clarity. The claimed subject matter, however, is not intended to be limited to the specific terminology so selected.

Also, as used in the specification including the appended claims, the singular forms "a," "an," and "the" include the plural, and reference to a particular numerical value includes at least that particular value, unless the context clearly dictates otherwise. The term "plurality", as used herein, means more than one. When a range of values is expressed, another embodiment includes from the one particular value or to the other particular value. Similarly, when values are expressed as approximations, by use of the antecedent "about," it will be understood that the particular value forms another embodiment. All ranges are inclusive and combinable. It is to be understood that the terminology used herein is for the purpose of describing particular aspects only and is not intended to be limiting.

This written description uses examples to enable any person skilled in the art to practice the claimed subject matter, including making and using any devices or systems and performing any incorporated methods. Other variations of the examples are contemplated herein. It is to be appreciated that certain features of the disclosed subject matter which are, for clarity, described herein in the context of separate embodiments, may also be provided in combination in a single embodiment. Conversely, various features of the disclosed subject matter that are, for brevity, described in the context of a single embodiment, may also be provided separately or in any sub-combination. Further, any reference to values stated in ranges includes each and every value within that range.

The scope of this disclosure encompasses all changes, substitutions, variations, alterations, and modifications to the example embodiments described or illustrated herein that a person having ordinary skill in the art would comprehend. The scope of this disclosure is not limited to the examples described or illustrated herein. Moreover, although this disclosure describes and illustrates respective embodiments herein as including particular components, elements, feature, functions, operations, or steps, any of these embodiments may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular embodiments as providing particular advantages, particular embodiments may provide none, some, or all of these advantages.

## Claims

1. A method comprising:
receiving, by one or more computer processors coupled to memory, a query associated with social media content;
retrieving social media content associated with a plurality of messaging platforms based on the query;
determining a consolidated content feed based on the social media content from the plurality of social media platforms; and
sending instructions to arrange the consolidated content feed into a plurality of content slots, wherein the content slots comprise first-party content slots comprising first-party platform content from platforms owned by a first entity and third-party content slots comprising third-party platform content from platforms owned by one or more other entities.

2. The method of claim 1, further comprising:
providing the consolidated content feed to a user computing device.

3. The method of claim 1 or claim 2, further comprising:
inserting sponsored content between the content slots in the consolidated content feed; and
providing the consolidated content feed to a user computing device.

4. The method of any preceding claim, wherein the retrieving the social media content is based on accessing the plurality of social media platforms, wherein the accessing comprises:
authenticating with at least one of the plurality of social media platforms using stored user credentials;
identifying available content types on the at least one of the plurality of social media platforms; and
determining content retrieval parameters for the at least one of the plurality of social media platforms.

5. The method of any preceding claim, wherein the determining the consolidated content feed comprises:
analyzing content relevance scores for the retrieved social media content;
filtering content based on user engagement metrics; and
organizing the content based on temporal relationships.

6. The method of any preceding claim, wherein the arranging the consolidated content feed comprises:
allocating a first portion of the plurality of content slots to first-party platform content;
allocating a second portion of content slots to the third-party platform content; and
distributing sponsored content between the plurality of content slots based on user engagement metrics.

7. The method of any preceding claim, further comprising:
tracking user engagement with the consolidated content feed;
updating user preference data based on the tracked user engagement; and
adjusting future content retrieval based on the updated user preference data.

8. The method of any preceding claim, further comprising:
receiving sponsored content from one or more advertisers;
determining optimal placement positions within the consolidated content feed; and
inserting the sponsored content at the determined optimal placement positions.

9. The method of any preceding claim, wherein the first-party content slots comprise content from a first subset of the plurality of social media platforms owned by a social media company and the third-party content slots comprise content from external social media platforms.

10. A method comprising:
receiving, by an artificial intelligence, AI, computing device, a query for social media content;
accessing, by the AI computing device, a plurality of social media platforms in response to the query;
retrieving social media content from the plurality of social media platforms based on the query;
generating, by the AI computing device, a consolidated content feed that includes content from the plurality of social media platforms;
arranging the consolidated content feed into a plurality of content slots, wherein the content slots comprise first-party content slots containing content from platforms owned by a first entity and third-party content slots containing content from platforms owned by other entities;
inserting sponsored content between the content slots in the consolidated content feed; and
providing the consolidated content feed to a user computing device.

11. The method of claim 10, wherein accessing the plurality of social media platforms comprises:
authenticating with each platform using stored user credentials;
identifying available content types on each platform; and
determining content retrieval parameters for each platform,
and/or
wherein generating the consolidated content feed comprises:
analyzing content relevance scores for retrieved content;
filtering content based on user engagement metrics; and
organizing content based on temporal relationships,
and/or
wherein arranging the consolidated content feed comprises:
allocating a first portion of content slots to first-party platform content;
allocating a second portion of content slots to third-party platform content; and
distributing sponsored content between the content slots based on engagement metrics.

12. The method of claim 10 or claim 11, further comprising:
tracking user engagement with the consolidated content feed;
updating user preference data based on the engagement; and
adjusting future content retrieval based on the updated preference data.
and/or further comprising:
receiving sponsored content from multiple advertisers;
determining optimal placement positions within the consolidated feed; and
inserting the sponsored content at the determined positions.

13. The method of any of claims 10 to 12, wherein the first-party content slots contain content from social media platforms owned by a social media company and the third-party content slots contain content from external social media platforms.

14. A method comprising:
determining, by one or more computer processors coupled to memory, a user identifier associated with a first application;
determining a request, via the first application, for first content from a second application and third content from a third application;
determining that the first user identifier is associated with a second user identifier and a third user identifier, wherein the second user identifier is associated with the second application, and the third user identifier is associated with the third application;
automatically retrieving the first content via interaction with the second application;
automatically retrieving the second content via interaction with the third application; and
causing presentation of the first content and the second content in a user interface of the first application.

15. The method of claim 14, wherein:
the one or more computer processors coupled to memory are configured to execute an AI agent to interact with the second application or the third application, and/or
the first content and the second content are presented without opening the second application or the third application, and/or
the request is determined automatically when the user identifier opens the first application on a mobile device.
